# EUROPEAN PATENT SPECIFICATION

(11) **EP 1 239 652 B1**
(45) Date of publication and mention of the grant of the patent: **16.06.2004**
(21) Application number: 02004773.4
(22) Date of filing: 01.03.2002
(51) Int. Cl.: H04M 3/533, H04L 12/18, H04L 12/58, H04M 3/56, H04N 7/14

(54) **Teleconferencing method and system**
Verfahren und System zur Abhaltung von Videokonferenzen
Procédé et système de téléconférence

(30) Priority: 01.03.2001 JP 2001057492
(43) Date of publication of application: 11.09.2002
(73) Proprietor: Kabushiki Kaisha Square Enix (also trading as Square Enix Co., Ltd.), Tokyo 151-8544 (JP)
(72) Inventor: Maehiro, Kazutoyo, Tokyo 115-8544 (JP)
(74) Representative: Grünecker, Kinkeldey, Stockmair & Schwanhäusser Anwaltssozietät

(56) References cited:
- EP-A- 0 944 003
- WO-A-01/72020
- US-A- 5 506 832

## Description

The present invention relates to teleconferencing, and more particularly, to allowing private communications among arbitrary participants in a teleconference.

An Internet connection function installed in a video game machine can provide various services through an Internet service provider (ISP) server. New services may be provided such as distribution of game software and implementation of a fighting game over a network. On the other hand, combination between a service such as e-mail and teleconferencing (called chat hereinafter) and a service relating to games, both of which have been conventionally provided over the Internet, may provide newer services.

In the fighting game, one user can play with another user over a network as an opposing enemy or a friend who fights together. If users who know each other through the game have a medium to communicate with each other, they can exchange information regarding the game, which may increase the nature of entertainment in the game. Further, if multiple participants rather than two participants in the one-to-one fighting game can participate in the game at the same time, information exchange through the chat may be more effective. In order to establish the chat session, a starter or one of the participants sends a message to a chat room and a server in response thereto broadcasts the message to the other starter or participants.

However, a conventional chat service only broadcasts the chat message to all of the participants in the same chat room but cannot send the chat message only to specific participants in the chat room during chatting. In order to send a message only to specific participants, an extra application such as e-mail must be used.

Document EP-A-0 944 003 discloses a notification subsystem and a communication method, whereby a predefined action is associated with a notification. The notification is sent to a user terminal and displayed on a screen of the user terminal. The notification can be associated with a target address, which is e.g. predefined by the notification server 2 in the server 1. The action is automatically directed to the target address. The predefined action can be activated addressed to the target address by a response to the displayed notification of the user terminal. A notification server is responsible for sending notifications. To do so, the notification server collaborates with the session manager to determine who is currently online and available, and to get a handle to the recipient's connection manager in order to deliver the message. The session manager connects to a data base of members and is responsible for knowing who is logged onto the system at any time.

Document WO 01/72020 A discloses a communications system for transferring electronic data between users of a communications system by enabling instant messaging communication between a sender and at least one recipient through an instant messaging host. Instant messages are private online conversations between two or more people who have subscribed to the instant messaging service and have installed the necessary software. In addition to the textual body, the instant message may include header information identifying the message type, the screen name and/or IP address of the sender and recipient. The instant messaging communication may include receiving and authenticating a text instant message from the sender at the instant messaging host; determining capabilities of the recipient; reporting the capabilities of the recipient; receiving a request to establish voice communication from the sender and/or the recipient; and/or authenticating the request. A user interface may be displayed according to the capabilities of the recipient.

It is the object of the present invention to provide a method and a system for teleconferencing, in particular for performing a chat-room, which allow private communication among arbitrary participants in a teleconference through easy processing during the teleconference.

This object is solved by the subject matters of the independent claims. Preferred embodiments are defined in the dependent claims.

According to one aspect of the present invention, there is provided a teleconferencing method for performing a teleconference by using an area set in a database in a server. The method includes causing a source terminal to add to a message a header, including a flag indicating whether the message is sent as private communication and information for identifying a recipient of the message, and to send the message to the server. The method also includes causing the server to transfer the message, to which the flag is added, to the recipient terminal based on the information identifying the recipient. The method further causes the recipient terminal to display the message transferred from the server terminal, along with information indicating the private communication.

According to another aspect of the present invention, there is provided a message control method for causing a server to provide a private communication service in a teleconference. The method includes receiving a message from a source terminal, to which message a header including a flag indicating whether the message is sent as the private communication and information for identifying a recipient is added. The method also includes transferring to the recipient terminal a , received message to which the flag indicating the message is sent through the private communication is added, based on the information identifying the recipient.

According to another aspect of the present invention, there is provided a message control method for performing private communication among terminals participating in a teleconference by using an area set in a database in a server. The method includes causing a source terminal to add to a message a header, including a flag indicating whether the message is sent as private communication and information for identifying a recipient of the message, and to send the message to the server. The method also includes causing the recipient terminal to display the message transferred from the server terminal, along with information indicating the message is sent as private communication.

In this case, the source terminal receives a private communication selection as to whether the message is sent as the private communication and a recipient selection indicating the recipient of the message transferred through the private communication, and creates the header based on the private communication selection and the recipient selection.

In the message control method, the recipient terminal displays the message, to which the flag indicating that the message is sent through the private communication is added, and the information that the message is sent through the private communication on the same display area where a general message is displayed.

According to another aspect of the present invention there is provided a teleconferencing system for performing a teleconference by using an area set in a database in a server. A source terminal includes a sending system that sends a message to the server, while adding a header including a flag indicating whether the message is sent as private communication and information for identifying a recipient of a message to the message. The server includes a transferring system that transfers to the recipient terminal the message to which the flag is added, based on the information identifying the recipient. The recipient terminal includes a display system that displays the message transferred from the server terminal, along with information indicating the message is sent as the private communication.

According to another aspect of the present invention, there is provided a server for providing a private communication service in a teleconference. The server includes a receiver that receives from a source terminal a message, to which a header including a flag indicating whether the message is sent as the private communication and information for identifying a recipient. The server also includes a transferring system that transfers to the recipient terminal a received message, to which the flag indicating the message is sent as the private communication is added, based on the information identifying the recipient.

According to another aspect of the present invention, there are provided terminals participating in a teleconference by using an area set in a database in a server. A source terminal includes a sending system that sends a message to the server, while adding to the message a header including a flag indicating whether the message is sent as private communication and information for identifying a recipient of the message. A recipient terminal includes a display system that displays the message transferred from the server terminal, along with information indicating the message is sent as private communication.

According to another aspect of the present invention, there is provided a computer-readable recording medium on which is recorded a program for controlling a server for providing a private communication service in a teleconference. The program causes a computer to receive from a source terminal a message, to which a header is added including a flag indicating whether the message is sent as private communication and information for identifying a recipient, and transfer to the recipient terminal the received message to which the flag indicating that the message is sent as private communication is added, based on the information for identifying the recipient.

According to another aspect of the present invention, there is provided a computer readable recording medium on which is recorded a program for controlling a terminal for performing a private communication service in a teleconference. The program causes a computer to send to the server a message, while adding to the message a header including a flag indicating whether the message is sent as private communication and information for identifying a recipient of the message. The program also causes the computer to display the message received from the server, along with information that the message is sent as private communication.

In the computer-readable recording medium, when sending the message to the server, the computer accepts a private communication selection indicating whether the message is sent as private communication and a recipient selection indicating a recipient of the message in the private communication, and creates the header based on the private communication selection and the recipient selection.

According to another aspect of the present invention, there is provided a teleconferencing method for performing a teleconference including a server and multiple terminals. The method causes the server to transfer a message sent from one of the terminals to the other terminals, causing each of the other terminals to display cumulatively a scrolled message display screen each time the transferred message is received. The method also causes a source terminal to accept a private communication selection indicating whether the message is sent as private communication and a recipient selection indicating the recipient of the message in the private communication, and to create and to send a privacy message if there is the private communication selection or a general message if there is not the private communication selection. The method further causes the server to transfer the general message to all of the terminals participating in the teleconference or to transfer the privacy message to the recipient terminal, and causes the terminal to display the general message on a display area of the message display screen or to display the privacy message on the display area along with information that it is a private communication.

Thus, the private communication can be performed among arbitrary participants in a teleconference through easy processing by using a video game machine.
Fig. 1 is a structural diagram showing a system for teleconferencing, according to one embodiment of the present invention;
Fig. 2 is a block diagram showing a video game machine in which teleconferencing according to one embodiment of the present invention is implemented;
Fig. 3 is a sequence diagram showing a method for participating in a teleconference, according to one embodiment of the present invention;
Fig. 4 is a flowchart showing a private communication method in a teleconference, according to one embodiment of the present invention;
Fig. 5 is a diagram showing a communication data format for a message in a teleconference, according to one embodiment of the present invention;
Fig. 6 is a diagram showing a chat screen, according to one embodiment of the present invention;
Fig. 7 is a diagram showing a message creating screen, according to one embodiment of the present invention;
Fig. 8 is a diagram showing a chat screen displayed in response to the receipt of a message through a private communication method; and
Fig. 9 is a flowchart showing another private communication method in a teleconference, according to one embodiment of the present invention.

Embodiments of the present invention will be described below in detail with reference to drawings.

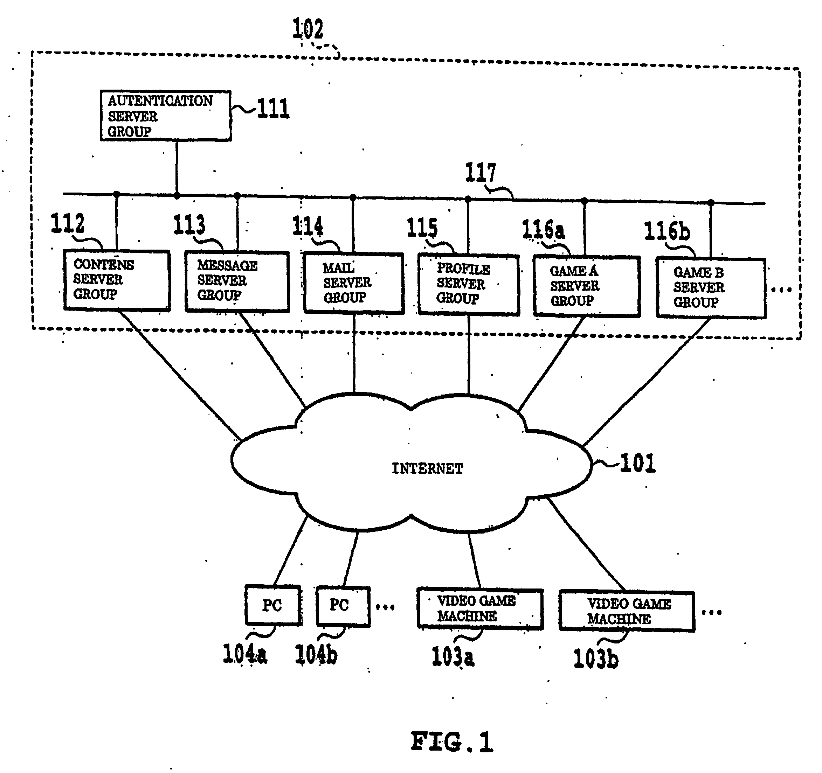

Fig. 1 is a structural diagram showing a system for providing a teleconference, according to one embodiment of the present invention. Fig. 1 includes an Internet 101 to which an ISP server 102, video game machines 103a and 103b and generic computers 104a and 104b are connected.

The ISP server 102 includes multiple server groups. For example, an authorization server group 111 may be provided for performing account management for user authorization. A content server group 112 may provide a service for viewing content such as voice and moving pictures, and a message server group 113 may provide an environment for chat and/or messaging. A mail server group 114 may provide e-mail services, a profile server group 115 may be provided for managing user profiles, and game server groups 116a and 116b may provide a game environment. All of the server groups are connected via a LAN 117.

In order to obtain authorization under the configuration, a user can access from the video game machine 103a or 103b or generic computer 104a or 104b the authorization server group 111 in the server 102 through the Internet 101. The server 102 sends a menu screen to the authorized user. The user may select one of services displayed on the menu screen. In response to the selection, the video game machine 103a or 103b or generic computer 104a or 104b is connected to a server group corresponding to the selected service. Then, the user can receive the service.

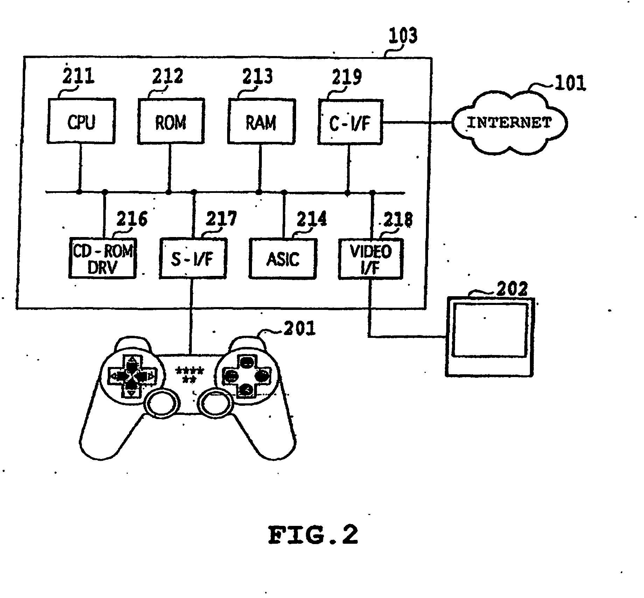

Fig. 2 is a block diagram showing a video game machine in which teleconferencing, according to one embodiment of the present invention, is implemented. In a video game machine 103, a CPU 211 for performing the entire control, a ROM 212 in which game programs and programs for message control according to the present invention are stored, a RAM 213 which is a temporary memory area, and an application-specific integrated circuit (ASIC) 214 for performing image processing are connected through a bus 215.

Further, a CD-ROM drive 216 for reading programs from a CD-ROM in which the game programs and the programs for the message control are stored, is also connected to the bus 215. Moreover, a serial interface 217 connected to a game controller 201, a video interface 218 connected to a television monitor 202, and a communications interface 219 for connecting to the Internet 101 are connected through the bus 215.

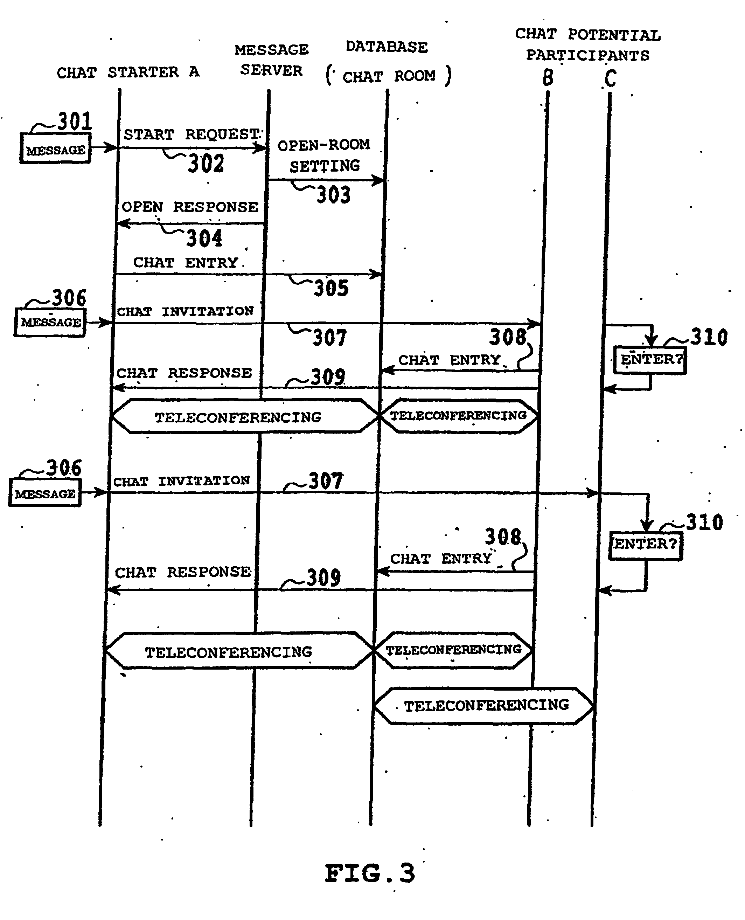

Fig. 3 is a sequence diagram showing a method for participating in a teleconference according to one embodiment of the present invention. A user starting a chat creates a message 301 for opening a chat-room in the video game machine 103a. When the message is sent, a chat-room open request 302 is sent to the message server group 113. The message server group 113 sends a open room setting 303 for opening a requested chat-room to a database in server groups 113 and also returns a chat-room open response 304 to the user. Starting a chat-room means that the message server group 113 sets a certain area in the database and grants an access right to specific users, that is, to chat potential participants only.

The user receives the chat-room start response 304, which is information necessary for accessing the region for chat, and then sends a chat-room entry message 305 to the database in order to enter the chat-room (in order to participate in the chat). The chat-room is entered by accessing the predetermined area in the database by applying to the message server group 113 for the access right the user has.

Further, based on the created message 301, a message 306 for inviting potential chat participants to participate in a chat, is sent to chat participants and displayed. Then, a chat invitation 307 is sent to all of the potential participants. A screen 310 for prompting to enter the chat-room is displayed on the video game machine 103b of each potential participant having received the chat invitation 307. The potential participants send a chat-room entry message 308 to the database in order to participate in the chat. Here, a chat response 309 for notifying that the potential participant has accepted the invitation of the chat-room starter is sent from the potential participants to the chat-room starter. According to the present invention, the chat invitation 307 grants to each potential participant an access right to the opened chat-room and also prompts participation into the chat.

Even after the chat-room has been opened, the chat invitation 307 can be sent to other potential chat participants. The screen 310 for prompting to enter the chat-room is displayed on a video game machine 103c of each of the potential participants having received the chat invitation 307. Then, the potential participants can send the chat-room entry message 308 to the database in order to participate in the chat. Here, a chat response 309 for notifying that the potential participant has accepted the invitation of the chat-room starter is sent from the potential participant to the chat-room starter.

A chat starter or a participant sends a message to the chat-room and the message server broadcasts the message stored in the database to the other participants and/or the starter in order to perform chat.

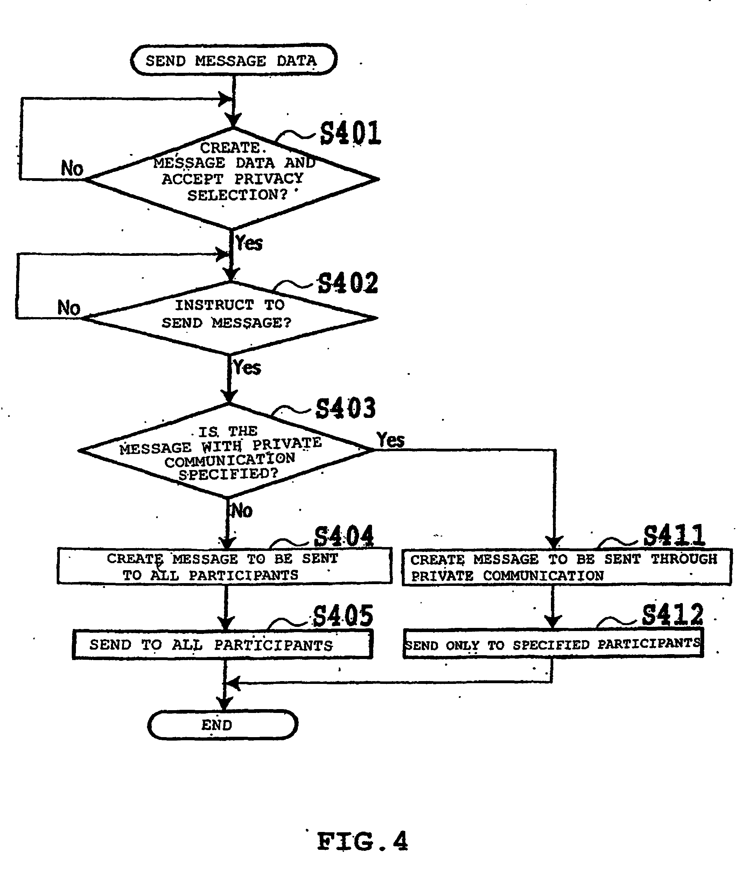

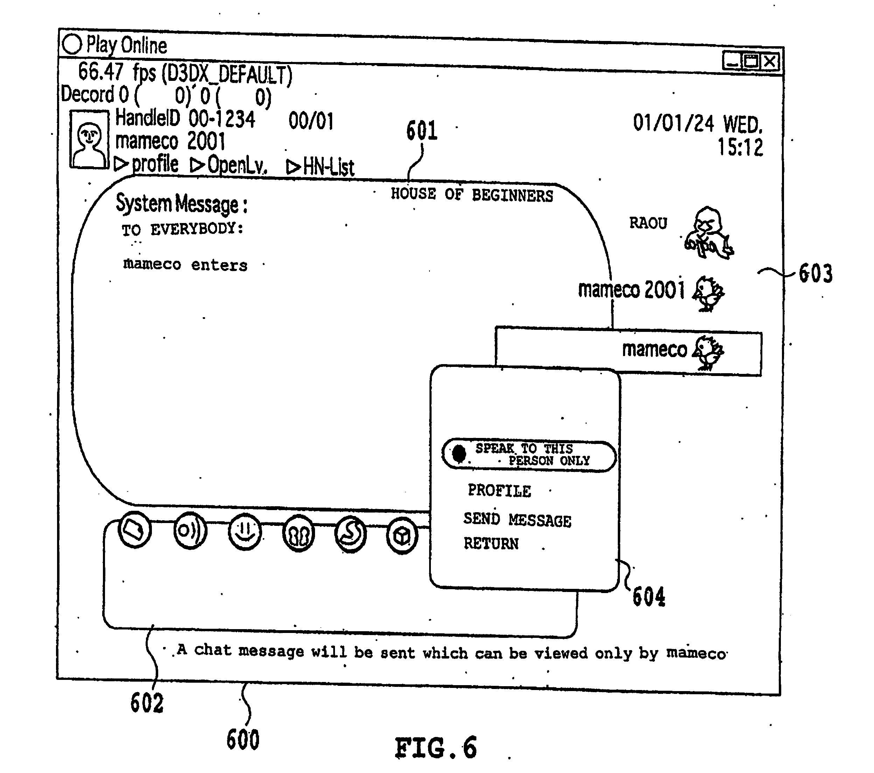

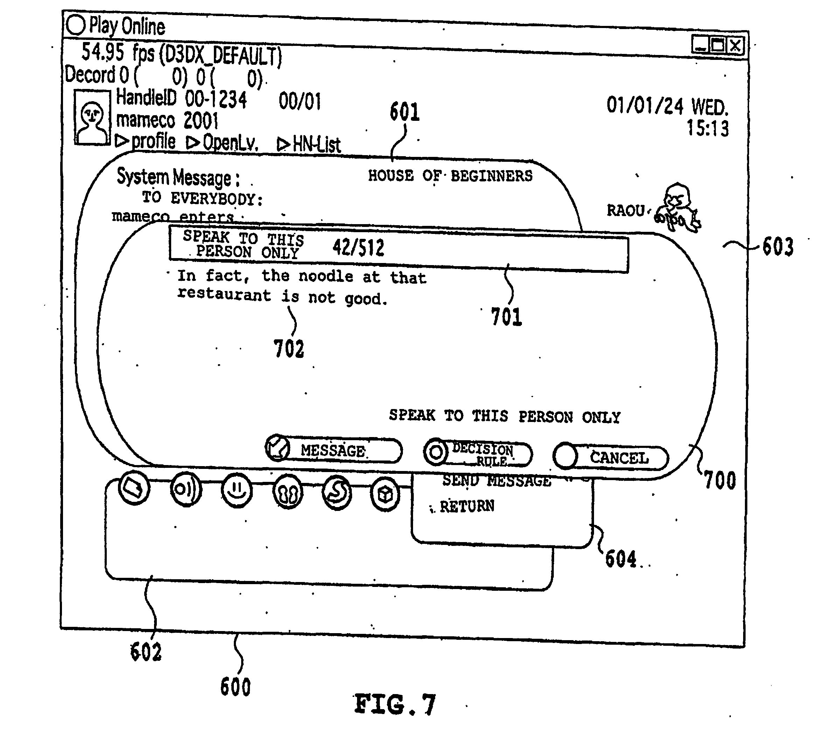

Fig. 4 is a flowchart for indicating a private communication method in a teleconference according to one embodiment of the present invention. When the participant sends a message, a source terminal accepts input including the specification of private communication, the source of the message, and an input of message data. The user inputs the information on a pop-up screen, which will be described below with reference to Fig. 6, and on a message creating screen, which will be described with reference to Fig. 7 (S401). When the participant finishes the message creation, the participant instructs the message server to send the message (S402).

The source terminal checks whether private communication has been specified(S403). If there is no specification of the private communication, a message to be sent to all participants in the chat is created and a message header and so on are added thereto based on the input message (S404). Then, the message is sent to the message server (S405), which forwards the message to all of the participants.

If the participant has specified that private communication should occur (S403), the source terminal creates a message to be sent as a private communication to the specified recipients and adds a message header and so on thereto. Then, the message is sent to the message server (S412).

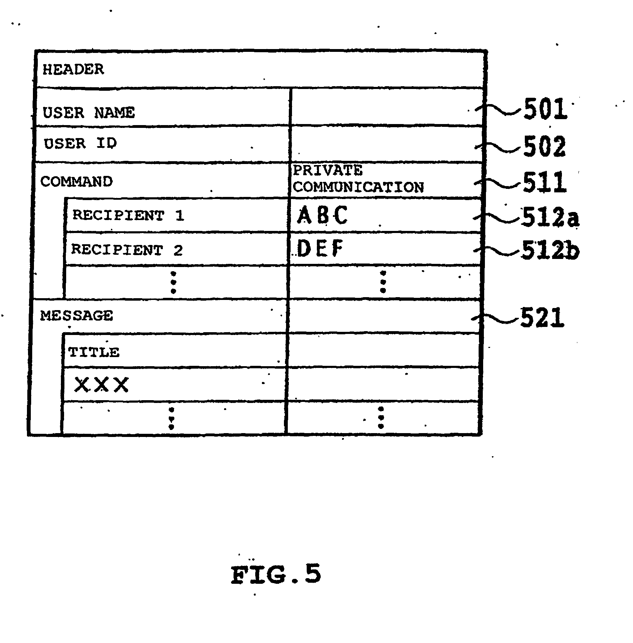

Fig. 5 is a diagram showing a communication data format for a message in a teleconference according to one embodiment of the present invention. The video game machine 103 sets a user name 501 and a user ID 502 of the pre-registered chat starter. Then, the video game machine 103 sets a message input received by one of the participants in a message field 521. If the participant specifies private communication, the video game machine 103 sets a specific flag indicating "private communication" in a command field 511. Then, information for identifying recipients specified by the participant is set in recipient fields 512a and 512b.

As such, the message server does not broadcast but sends the message, in which the specific flag is set indicating "private communication" in the command field 511, only to the starter or participants set in the recipient fields 512a and 512b.

Fig. 6 is a diagram showing a chat screen according to one embodiment of the present invention. A chat screen 600 includes a chat window 601 for displaying a message sent from the starter or one of the participants, a chat sub-command window 602 for listing functions available during chat, and a participating member table 603 listing participants.

If the participant sends a message as a private communication, the participant selects "speak to this person only" in a pop-up screen 604 which is displayed in response to the selection of receiving members in the participating member table 603. Alternatively, the participant may select the "speak to this person only" in a pop-up window, not shown, which is displayed in response to the selection of a "message" in the chat sub-command window 602. Then, the participant may specify the recipients after creating the message.

Fig. 7 is a diagram showing a message creating screen according to one embodiment of the present invention. A message creating screen 700 is displayed over the chat screen 600. The message creating screen 700 includes a message title 701 and a text box 702 that shows the contents of the message.

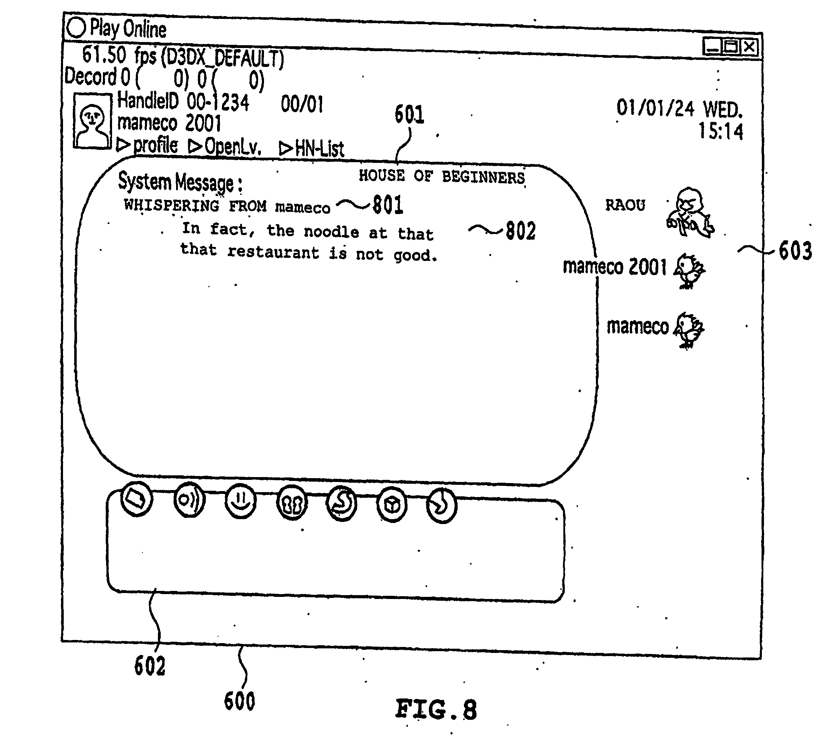

Fig. 8 is a diagram showing a chat screen displayed in response to the receipt of a private message. A message title 801 and a text box 802 which shows the contents of the message are displayed in the chat window 601 of the chat screen 600. A terminal having received the message refers to the header of the message shown in Fig. 5. If the specific flag indicating "private communication" is set in the command field 511 of the header, the terminal adds "Whispering From XXX" to the message title 801. The participant having received the message is thus informed of the fact that the message was sent as a private communication.

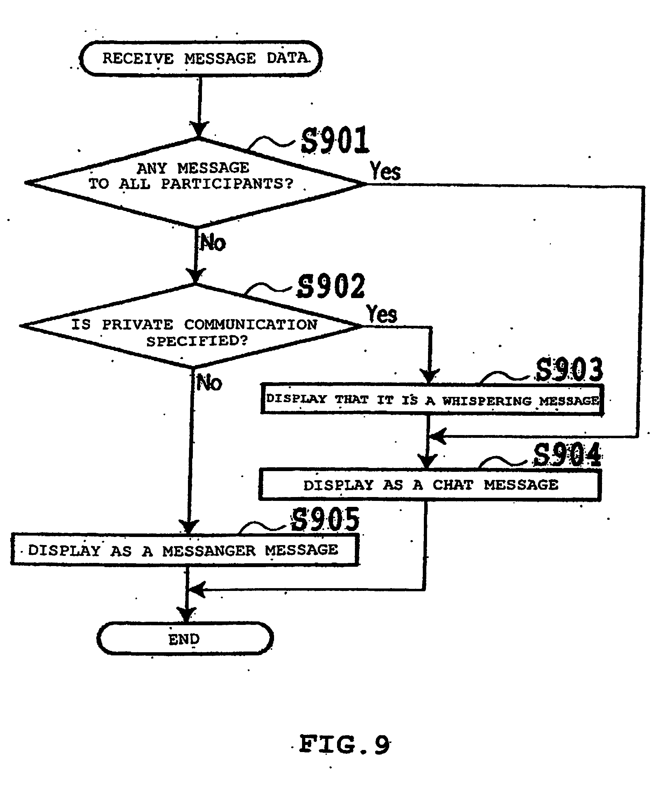

Fig. 9 is a flowchart showing another private communication method in a teleconference according to one embodiment of the present invention. A recipient terminal having received the message determines whether or not the message is sent to all of the participants or to specific participants based on the message header (S901). If the message was sent to all of the participants, the message is displayed on the chat window 601 as a general chat message (S904). If the message was sent to specific participants, the terminal checks the specific flag in the command field 511 in the data format shown in Fig. 5 (S902).

If there is the specific flag showing the "private communication " in the command field 511, the terminal refers to the recipient fields 512a and 512b and checks whether the terminal, that is the video game machine 103 in this case, itself is specified as the recipient. If so, the terminal displays the indication indicating that the message was sent through the private communication (S903) and the message as a chat message in the chat window 601 (S904).

If the specific flag is not preset in the command field 511, the message is delivered as a general message. Then, another message window is opened, and the message is displayed thereon (S905).

In this embodiment, through private communication, the message is sent only to the recipient terminals specified by the terminal sending the message. Then, in each of the recipient terminals, the indication that the message is sent through the private communication is displayed in the chat window along with the message. However, the present invention is not intended to limit to this method. The following method may be used, in other ways.

For example, even with the private communication, the source terminal sends a message along with a message header indicating the addresses of the recipients to all of the participants in the same chat. In each of the recipient terminals, the message is displayed on the screen only if the address of the recipient terminal itself is included in the message header. The recipient terminal does not display but rather discards the message if the address of the recipient terminal is not included in the message header. Thus, the source participant can perform private communication with the specified participant even in chat with many other participants.

The video game machine or the generic computer may read and execute program codes of the software for implementing the message control method according to the present invention from a recording medium for storing the program codes. The recording medium for supplying the program codes may be a floppy disk, a hard disk, a magneto-optical disk, an optical disk, a CD-ROM, a CD-R, a magnetic tape, a non-volatile memory card, or a ROM.

Further, the teleconferencing starting method and message control method according to the present invention can be applied not only to a general stand-alone computer, but also to a client-server system including multiple computers.

## Claims

1. A teleconferencing method for performing a teleconference, which is in particular a chat-room, with a system comprising at least one server and a plurality of terminals, wherein the terminals are able to share messages with each other by means of a network and wherein the server transfers messages sent by one of the terminals to other terminals,
**characterized in that**
a source terminal is able to create a general message, which is sent to all other terminals participating in the teleconference, in particular chat-room, and in addition, said source terminal is able to create a privacy message, which is addressed exclusively to a particular recipient terminal that is specified by the source terminal and participates in said teleconference, in particular chat-room, wherein said source terminal sends said privacy message without having to initialize and to open a separate teleconference, in particular a separate chat-room, in which only the source terminal and the particular recipient terminal of the privacy message participate, but instead uses said on-going teleconference, in particular chat-room; and
wherein a recipient terminal participating in the teleconference, in particular chat-room, is able to receive said general message and is able to receive said privacy message for which the recipient terminal is specified as the recipient terminal;
wherein the recipient terminal is able to display the received general message and the received privacy message distinguishable for a user by displaying the general message on a display area of the message display screen and by displaying the privacy message along with information indicating that it was sent as a privacy message on said user display area , wherein said displaying of the privacy message is being done without prior action by the user and without having to initialize and to open a separate teleconference, in particular a separate chat-room, for said privacy message.

2. A teleconferencing method according to claim 1,
**characterized in that**
a source terminal accepts from a user a private communication selection indicating whether the message is sent as a privacy message and a recipient selection indicating a recipient of the privacy message, and
the source terminal creates and sends a privacy message when the private communication selection exists or a general message when the private communication selection does not exist.

3. A teleconferencing method according to claim 1 or 2,
**characterized in that**
a message control method causes a source terminal to add to a message a header including a flag indicating whether the message is sent as a privacy message, and
to add information identifying a recipient terminal of the message to said header if said message is sent as a privacy message.

4. A teleconferencing method according to claim 3,
**characterized in that**
a server transfers a general message received from one of the terminals to all other terminals participating in the teleconference, in particular chat-room, and
said server transfers a privacy message received from one of the terminals participating in said teleconference, in particular chat-room, exclusively to the recipient terminals that are specified in the header of said privacy message as recipient terminals of said privacy message.

5. A teleconferencing method according to any one of claims 1 to 3,
**characterized in that**
a server transfers a general message and a privacy message received from one of the terminals to all other terminals participating in the teleconference, in particular chat-room, and
a recipient terminal that receives said privacy message displays said received privacy message if said received privacy message is addressed to said recipient terminal, and
said recipient terminal that receives said privacy message does not display said received privacy message if said received privacy message is not addressed to said recipient terminal.

6. A teleconferencing method according to claims 3 and 5,
**characterized in that**
said recipient terminal determines whether said received privacy message is addressed to said recipient terminal based upon said information identifying a recipient terminal of said message added to said header.

7. A teleconferencing system for performing a teleconference, which is in particular a chat-room, comprising a plurality of terminals and at least one server, wherein the terminals are adapted to share messages with each other by means of a network and wherein the server is adapted to transfer messages sent by one of the terminals to the other terminals,
**characterized in that**
a source terminal comprises a sending system that is adapted to create within the teleconference, in particular chat-room, a general message that is sent to all other terminals participating in said teleconference, in particular chat-room, and is adapted to further create a privacy message exclusively addressed to a particular terminal participating in said teleconference, in particular chat-room, based on information provided by a user, whereby said source terminal is adapted to send said privacy message without having to initialize and to open a separate teleconference, in particular separate chat-room, in which only the source terminal and the particular recipient terminal of said privacy message participate, but instead said source terminal is adapted to use said on-going teleconference, in particular chat-room;
a server comprising a transferring system that is adapted to transfer within the teleconference, in particular chat-room, the general message, whereby said transferring system is adapted to transfer said privacy message within said on-going teleconference, in particular chat-room, without the need for a separate teleconference, in particular separate chat-room, in which only the source terminal and the particular recipient terminal of said privacy message participate; and
a recipient terminal comprises a displaying system that is adapted to display a received general message and a received privacy message distinguishable for a user by displaying the general message on a display area of the message display screen and by displaying the privacy message along with information indicating that said privacy message was sent as a privacy message on said display area, whereby said displaying of the privacy message is being done without prior action by the user and without a need for a separate teleconference, in particular separate chat-room, for said privacy message.

8. A teleconferencing system according to claim 7,
**characterized in that**
a source terminal is adapted to accept from a user a private communication selection indicating whether the message is sent as a privacy message and a recipient selection indicating a recipient of said privacy message, and
said source terminal is adapted to create and to send a privacy message when the private communication selection exists or a general message when the private communication selection does not exist.

9. A teleconferencing system according to one of claims 7 or 8,
**characterized in that**
the source terminal is adapted to add to a message a header including a flag indicating whether the message is sent as a privacy message and is adapted to add information identifying a recipient terminal of the message to said header if said message is sent as a privacy message.

10. A teleconferencing system according to claim 9,
**characterized in that**
said transferring system of said server is further adapted to transfer a general message received from one of the terminals to all other terminals participating in the teleconference, in particular chat-room, and
said transferring system of said server is further adapted to transfer a privacy message received from one of the terminals participating in said teleconference, in particular chat-room, exclusively to the recipient terminals that are specified in the header of said privacy message as recipient terminals of said privacy message.

11. A teleconferencing system according to any one of claims 7 to 9,
**characterized in that**
said transferring system of said server is adapted to transfer a general message and a privacy message received from one of the terminals to all other terminals participating in the teleconference, in particular chat-room, and
a recipient terminal that receive said privacy message is further adapted to display said received privacy message if said received privacy message is addressed to said recipient terminal, and
said recipient terminal that receives said privacy message is further adapted not to display said received privacy message if said received privacy message is not addressed to said recipient terminal.

12. A teleconferencing system according to claims 9 and 11,
**characterized in that**
said recipient terminal is further adapted to determine whether said received privacy message is addressed to said recipient terminal based upon said information identifying a recipient terminal of said message added to said header.

13. A server for providing a private communication service within a teleconference, which is in particular a chat-room, in which a plurality of terminals participate, comprising a transferring system that is adapted to transfer a general message received from a source terminal participating in said teleconference, in particular chat-room, to all other terminals participating in said teleconference, in particular chat-room, and in addition, the server is adapted to transfer a privacy message received from the source terminal exclusively to a particular terminal participating in said teleconference, in particular chat-room, based on information provided by the source terminal, whereby said transferring system is adapted to transfer said privacy message within said teleconference, in particular chat-room, without the need for a separate teleconference, in particular separate chat-room, in which only the source terminal and the particular recipient terminal participate.

14. A server according to claim 13,
**characterized in that**
the server comprises a receiver that is adapted to receive from the source terminal a message to which a header is added including a flag indicating whether the message is sent as a privacy message and information identifying the recipient terminal, and
the transferring system is adapted to transfer a received message, to which the flag in said header indicating whether the message is sent as a privacy message is set, exclusively to said particular recipient terminal specified by said information identifying the recipient terminal of said message.

15. A computer-readable recording medium on which is recorded a program for controlling a server for providing a private communication service within a teleconference, in particular chat-room, in which a plurality of terminals participate and for causing a computer to execute:
receiving from a source terminal that is participating in said teleconference, in particular chat-room, a message to which a header is added including a flag indicating whether the message is sent as a privacy message and information for identifying a particular recipient terminal participating in said teleconference, in particular chat-room; and
transferring within said teleconference, in particular chat-room, the received message, to which the flag indicating that the message is sent as a privacy message is set, exclusively to the particular recipient terminal that is specified by said information identifying said particular recipient terminal without the need for a separate teleconference, in particular separate chat-room, in which only the source terminal and the particular recipient terminal of said received message participate; and
transferring within said teleconference, in particular chat-room, the received message from a source terminal participating in said teleconference, in particular chat-room, to which the flag indicating that the message is sent as a privacy message is not set, to all other terminals that are participating in said teleconference, in particular chat-room.

16. A computer-readable recording medium on which is recorded a program for controlling a plurality of terminals for performing a private communication service within a teleconference, in particular chat-room, and for causing a computer to execute:
sending to a server a general message and/or a privacy message, while adding to the message a header including a flag indicating whether the message is sent as a privacy message and information for identifying a recipient terminal of the message that is participating in said teleconference, in particular chat-room, wherein said general message is intended to be displayed at all other terminals that are participating in said teleconference, in particular chat-room, and wherein said privacy message intended to be displayed exclusively at said recipient terminal specified by said information identifying the recipient terminal, and
wherein said privacy message is sent without having to initialize and to open a separate teleconference, in particular separate chat-room, in which only the terminal sending said privacy message and said recipient terminal participate, but instead using said on-going teleconference, in particular chat-room; and
displaying a received general message and a received privacy message distinguishable for a user by displaying said privacy message, along with information that the message was sent as a privacy message, wherein said displaying of the privacy message is being done without prior action by the user and without having to initialize and to open a separate teleconference, in particular chat-room, for said privacy message.

17. The computer-readable recording medium according to claim 16, wherein in sending the message to the server, a source terminal accepts a private communication selection indicating whether the message is sent as a privacy message and a recipient selection indicating the recipient terminal of said privacy message from a user, and creates the header based on the private communication selection and the recipient selection.

18. The computer-readable recording medium according to claim 16 or 17, wherein in displaying the message received from the server, the recipient terminal displays a privacy message, to which the flag indicating that the message is sent as a privacy message is set, along with the information that said message is sent as a privacy message, and displays a general message, to which the flag indicting that the message is sent as a privacy message is not set on the same display area.

19. The computer-readable recording medium according to any one of claims 16 to 18, wherein said displaying of said received privacy message is only being done if said terminal receiving said privacy message is specified by said information identifying the recipient terminal of said privacy message.

## Patentansprüche

1. Ein Konferenzschaltungsverfahren zum Durchführen einer Konferenzschaltung, insbesondere eines Chatrooms, in einem System, welches mindestens einen Server und eine Vielzahl von Terminals aufweist, worin die Terminals in der Lage sind mittels eines Netzwerkes Nachrichten gegenseitig auszutauschen und worin der Server Nachrichten weiterleitet, die von einem der Terminals zu anderen Terminals gesendet werden,
**gekennzeichnet dadurch, dass**
ein Quellen-Terminal in der Lage ist eine allgemeine Nachricht zu erzeugen, welche zu allen anderen Terminals, die in der Konferenzschaltung, insbesondere dem Chatroom, teilnehmen, gesendet wird und dieses Quellen-Terminal zusätzlich in der Lage ist eine private Nachricht zu erzeugen, welche ausschließlich an ein bestimmtes Empfangs-Terminal adressiert ist, das von dem Quellen-Terminal bestimmt wird und in der Konferenzschaltung, insbesondere dem Chatroom, teilnimmt, wobei das Quellen-Terminal die private Nachricht sendet ohne eine gesonderte Konferenzschaltung, insbesondere einen gesonderten Chatroom, initialisieren oder öffnen zu müssen worin nur das Quellen-Terminal und das bestimmte Empfangs-Terminal der privaten Nachricht teilnehmen, sondern stattdessen die laufende Konferenzschaltung, insbesondere Chatroom, benutzt wird;
und worin ein Empfangs-Terminal, welches in der Konferenzschaltung, insbesondere in dem Chatroom, teilnimmt, in der Lage ist eine allgemeine Nachricht zu empfangen und in der Lage ist eine private Nachricht zu empfangen für die das Empfangs-Terminal als Empfangs-Terminal bestimmt ist;
worin das Empfangs-Terminal in der Lage ist die empfangene allgemeine Nachricht und die empfangene private Nachricht unterscheidbar für einen Benutzer anzuzeigen, dadurch, dass die allgemeine Nachricht in einem Anzeigenbereich eines Nachrichten-Bildschirms angezeigt wird und die private Nachricht zusammen mit einer Information, welche **kennzeichnet**, dass sie als private Nachricht gesendet wurde in dem Anzeigenbereich angezeigt wird; wobei das Anzeigen der privaten Nachricht ohne vorherige Handlung des Benutzers und ohne eine gesonderte Konferenzschaltung, insbesondere einen gesonderten Chatroom, für diese private Nachricht initialisieren und öffnen zu müssen durchgeführt wird.

2. Ein Konferenzschaltungsverfahren gemäß Anspruch 1,
**gekennzeichnet dadurch, dass**
ein Quellen-Terminal von einem Benutzer eine private Kommunikationsauswahl empfängt, welche angibt, ob eine Nachricht als private Nachricht gesendet wird und eine Empfängerauswahl empfängt, welche einen Empfänger der privaten Nachricht anzeigt, und
das Quellen-Terminal eine private Nachricht erzeugt und sendet, wenn die Privatkommunikationsauswahl vorhanden ist oder eine allgemeine Nachricht erzeugt und sendet, wenn die Privatkommunikationsauswahl nicht vorhanden ist.

3. Ein Konferenzschaltungsverfahrerr gemäß Anspruch 1 oder 2,
**dadurch gekennzeichnet, dass**
ein Nachrichtenkontrollverfahren ein Quellen-Terminal veranlasst zu einer Nachricht einen Header hinzuzufügen, welcher ein Flag enthält, das angibt ob die Nachricht als private Nachricht gesendet wird und Informationen zu dem Header hinzuzufügen, welche ein Empfangs-Terminal dieser Nachricht **kennzeichnet**, falls diese Nachricht als private Nachricht gesendet wird.

4. Ein Konferenzschaltungsverfahren gemäß Anspruch 3
**dadurch gekennzeichnet, dass**
ein Server eine allgemeine Nachricht, welche von einem der Terminals empfangen wird, an alle anderen Terminals weiterleitet, die in der Konferenzschaltung, insbesondere dem Chatroom, teilnehmen und
der Server eine privaten Nachricht, die von einem der Terminals, das in der Konferenzschaltung, insbesondere dem Chatroom, teilnimmt, empfängt und ausschließlich an die Empfangs-Terminals weiterleitet, welche in dem Header der privaten Nachricht als Empfangs-Terminals dieser privaten Nachricht **gekennzeichnet** sind.

5. Ein Konferenzschaltungsverfahren gemäß einer der Ansprüche 1 bis 3
**dadurch gekennzeichnet, dass**
ein Server eine allgemeine Nachricht und eine private Nachricht, welche von einem der Terminals empfangen wird, an alle anderen Terminals weiterleitet, die in der Konferenzschaltung, insbesondere dem Chatroom, teilnehmen und
ein Empfänger-Terminal, welches eine private Nachricht empfängt, diese empfangene private Nachricht anzeigt, wenn diese empfangene private Nachricht zu diesem Empfangs-Terminal adressiert ist und
dieses Empfangs-Terminal, welches die private Nachricht empfängt, diese private Nachricht nicht anzeigt, falls die empfangene private Nachricht nicht an das Empfangs-Terminal adressiert ist.

6. Ein Konferenzschaltungsverfahren nach einem der Ansprüche 3 bis 5,
**dadurch gekennzeichnet, dass**
das Empfangs-Terminal ermittelt, ob die empfangene private Nachricht an das Empfangs-Terminal adressiert ist basierend auf der Information, welche zu dem Header hinzugefügt wurde und ein Empfangs-Terminal **kennzeichnet**.

7. Ein Konferenzschaltungssystem zum Ausführen einer Konferenzschaltung, welche insbesondere ein Chatroom ist, das eine Vielzahl von Terminals und mindestens einen Server umfasst, wobei die Terminals geeignet sind mittels eines Netzwerkes Nachrichten miteinander auszutauschen und wobei der Server geeignet ist Nachrichten, die von einem der Terminals gesendet werden an andere Terminals weiterzuleiten,
**dadurch gekennzeichnet, dass**
ein Quellen-Terminal ein Sendesystem aufweist, das dazu geeignet ist innerhalb einer Konferenzschaltung, insbesondere eines Chatrooms, eine allgemeine Nachricht zu erzeugen, welche zu allen anderen Terminals, die in der Konferenzschaltung, insbesondere dem Chatroom, teilnehmen, gesendet wird und weiterhin geeignet ist eine private Nachricht zu erzeugen, welche ausschließlich an ein bestimmtes Terminal adressiert ist, das in der Konferenzschaltung, insbesondere dem Chatroom, teilnimmt, basierend auf Information, die von einem Benutzer bereitgestellt wird, wobei das Quellen-Terminal geeignet ist die private Nachricht zu senden ohne eine gesonderte Konferenzschaltung, insbesondere einen gesonderten Chatroom, worin nur das Quellen-Terminal und das bestimmte Empfangs-Terminal der privaten Nachricht teilnehmen initialisieren und öffnen zu müssen, sondern stattdessen die laufende Konferenzschaltung, insbesondere Chatroom, zu nutzen;
ein Server, welcher ein Weiterleitungssystem aufweist, das geeignet ist, innerhalb der Konferenzschaltung, insbesondere Chatroom, eine allgemeine Nachricht weiterzuleiten, wobei dieses Weiterleitungssystem geeignet ist die private Nachricht innerhalb der laufenden Konferenzschaltung, insbesondere Chatroom, weiterzuleiten ohne der Notwendigkeit für eine gesonderte Konferenzschaltung, insbesondere gesonderter Chatroom, worin nur das Quellen-Terminal und das bestimmte Empfangs-Terminal für die private Nachricht teilnehmen;
ein Empfangs-Terminal, welches ein Anzeigesystem aufweist, das geeignet ist eine empfangene allgemeine Nachricht und eine empfangene private Nachricht unterscheidbar für einen Benutzer anzuzeigen, dadurch, dass die allgemeine Nachricht in einem Anzeigenbereich des Nachrichtenbildschirms angezeigt wird und das die private Nachricht zusammen mit Information, welche anzeigt, dass die private Nachricht als private Nachricht gesendet wurde, in diesem Anzeigenbereich angezeigt wird; wobei dieses Anzeigen der privaten Nachricht ohne vorherige Handlung des Benutzers und ohne eine Notwendigkeit für eine gesonderte Konferenzschaltung, insbesondere einem gesonderten Chatroom, für diese private Nachricht durchgeführt wird.

8. Ein Konferenzschaltungssystem gemäß Anspruch 7
**dadurch gekennzeichnet, dass**
ein Quellen-Terminal in der Lage ist von einem Benutzer eine Privat-Kommunikationsauswahl zu empfangen, welche anzeigt, ob die Nachricht als private Nachricht gesendet wird und in der Lage ist eine Empfängerauswahl zu empfangen, welche einen Empfänger der privaten Nachricht anzeigt und
dieses Quellen-Terminal so angepasst ist, dass eine private Nachricht erzeugt und gesendet wird, wenn die Privatkommunikationsauswahl vorhanden ist oder eine allgemeine Nachricht erzeugt und sendet, wenn die Privatkommunikationsauswahl nicht vorhanden ist.

9. Ein Konferenzschaltungssystem gemäß einem der Ansprüche 7 oder 8,
**dadurch gekennzeichnet, dass**
das Quellen-Terminal angepasst ist einer Nachricht einen Header hinzuzufügen einschließlich eines Flags, welches angibt, ob die Nachricht als private Nachricht gesendet wird und angepasst ist Information zu diesem Header hinzuzufügen, welche ein Empfangs-Terminal **kennzeichnet**, falls die Nachricht als private Nachricht gesendet wird.

10. Ein Konferenzschaltungssystem gemäß Anspruch 9,
**dadurch gekennzeichnet, dass**
das Weiterleitungssystem des Servers weiterhin dazu geeignet ist eine allgemeine Nachricht, welche von einem der Terminals empfangen wird, an alle anderen Terminals, die in der Konferenzschaltung, insbesondere dem Chatroom, teilnehmen, weiterzuleiten und das Weiterleitungssystem des Servers weiterhin dazu geeignet ist eine private Nachricht, die von einem der Terminals, die in der Konferenzschaltung, insbesondere dem Chatroom, teilnehmen, empfangen wird, ausschließlich zu den Empfangs-Terminals weiterzuleiten, welche in dem Header der privaten Nachricht als Empfangs-Terminals dieser privaten Nachricht **gekennzeichnet** sind.

11. Ein Konferenzschaltungssystem gemäß einem der Ansprüche 7 bis 9,
**dadurch gekennzeichnet, dass**
das Weiterleitungssystem des Servers dazu geeignet ist eine allgemeine Nachricht und eine private Nachricht, die von einem der Terminals empfangen wird, an alle anderen Terminals, die in der Konferenzschaltung, insbesondere dem Chatroom, teilnehmen, weiterzuleiten und ein Empfangs-Terminal welches eine private Nachricht empfängt, des Weiteren dazu geeignet ist die empfangene private Nachricht anzuzeigen, falls die empfangene private Nachricht an das Empfangs-Terminal adressiert ist und
das Empfangs-Terminal, welches eine private Nachricht empfängt, des Weiteren dazu geeignet ist die empfangene private Nachricht nicht anzuzeigen, falls die empfangene private Nachricht nicht an das Empfangs-Terminal adressiert ist.

12. Ein Konferenzschaltungssystem gemäß der Ansprüche 9 und 11,
**dadurch gekennzeichnet, dass**
das Empfangs-Terminal dazu geeignet ist zu ermitteln, ob die empfangene private Nachricht an das Empfangs-Terminal adressiert ist basierend auf der Information, die zu dem Header hinzugefügt wurde, welche ein Empfangs-Terminal der Nachricht **kennzeichnet.**

13. Ein Server zum Bereitstellen eines Privatkommunikationsservices innerhalb einer Konferenzschaltung, welche insbesondere ein Chatroom ist, worin eine Vielzahl von Terminals teilnehmen, der ein Weiterleitungssystem aufweist, das dazu geeignet ist eine allgemeine Nachricht, die von einem Quellen-Terminal, das in der Konferenzschaltung, insbesondere dem Chatroom, teilnimmt, empfangen wird an alle anderen Terminals die in der Konferenzschaltung, insbesondere dem Chatroom, teilnehmen, weiterleitet und zusätzlich dazu geeignet ist eine private Nachricht, die von einem Quellen-Terminal empfangen wird, ausschließlich an einen bestimmten Empfänger, der in der Konferenzschaltung, insbesondere dem Chatroom, teilnimmt, weiterzuleiten basierend auf Information, die durch das Quellen-Terminal bereitgestellt wird, wobei das Weiterteitungssystem dazu geeignet ist die private Nachricht innerhalb der Konferenzschaltung, insbesondere dem Chatroom, weiterzuleiten, ohne der Notwendigkeit für eine gesonderte Konferenzschaltung, insbesondere einen gesonderten Chatroom, worin nur das Quellen-Terminal und das bestimmte Empfangs-Terminal teilnehmen.

14. Ein Server gemäß Anspruch 13,
**dadurch gekennzeichnet, dass**
der Server einen Empfänger aufweist, welcher dazu geeignet ist von einem Quellen-Terminal eine Nachricht zu empfangen, zu der ein Header einschließlich eines Flags, das angibt ob die Nachricht als private Nachricht gesendet wird und Information, die das Empfangs-Terminal **kennzeichnet**, empfängt und
das Weiterleitungssystem dazu geeignet ist eine empfangene Nachricht, zu der das Flag in dem Header, das angibt ob die Nachricht als private Nachricht gesendet wird, gesetzt ist, ausschließlich zu dem bestimmten Empfangs-Terminal, das durch die Information, welche das Empfangs-Terminal der Nachricht **kennzeichnet**, weiterleitet.

15. Ein computerlesbares Speichermedium worauf ein Programm zum Kontrollieren eines Servers gespeichert ist zum Bereitstellen eines privaten Kommunikationsservices innerhalb einer Konferenzschaltung, insbesondere eines Chatrooms, worin eine Vielzahl von Terminals teilnehmen, zum Veranlassen eines Computers zum Ausführen von:
Empfangen von einem Quellen-Terminal, das in der Konferenzschaltung, insbesondere Chatroom, teilnimmt, eine Nachricht zu der ein Header hinzugefügt ist, einschließlich eines Flags, das **kennzeichnet** ob die Nachricht als private Nachricht gesendet wird und Information zum Kennzeichnen eines bestimmten Empfangs-Terminals, welches in der Konferenzschaltung, insbesondere dem Chatroom, teilnimmt; und
Weiterleiten innerhalb der Konferenzschaltung, insbesondere dem Chatroom, die empfangene Nachricht zu der das Flag, das **kennzeichnet**, ob die Nachricht als private Nachricht gesendet ist, gesetzt ist, ausschließlich zu dem bestimmten Empfangs-Terminal, das durch die Information, welche das bestimmte Empfangs-Terminal **kennzeichnet**, festgelegt ist, ohne die Notwendigkeit für eine gesonderte Konferenzschaltung, insbesondere gesonderten Chatroom, worin nur das Quellen-Terminal und das bestimmte Empfangs-Terminal der empfangenen Nachricht teilnehmen; und
Weiterleiten innerhalb der Konferenzschaltung, insbesondere Chatroom, die empfangene Nachricht von einem Quellen-Terminal, welches in der Konferenzschaltung, insbesondere dem Chatroom, teilnimmt, bei der das Flag, welches angibt, ob die Nachricht als private Nachricht gesendet wird, nicht gesetzt ist, zu all den anderen Terminals die in der Konferenzschaltung, insbesondere dem Chatroom, teilnehmen.

16. Ein computerlesbares Speichermedium, worauf ein Programm zum Kontrollieren einer Vielzahl von Terminals gespeichert ist, zum Durchführen eines privaten Kommunikationsservices innerhalb einer Konferenzschaltung, insbesondere eines Chatrooms, und zum Veranlassen eines Computers zum Ausführen von:
Senden einer allgemeinen Nachricht und/oder einer privaten Nachricht zu einem Server, während zu der Nachricht ein Header hinzugefügt ist einschließlich eines Flags, das angibt ob die Nachricht als private Nachricht gesendet ist und Informationen zum Kennzeichnen eines Empfangs-Terminals der Nachricht, welches in der Konferenzschaltung, insbesondere dem Chatroom, teilnimmt, wobei beabsichtigt ist die allgemeine Nachricht an allen anderen Terminals, die in der Konferenzschaltung, insbesondere dem Chatroom, teilnehmen, anzuzeigen und wobei beabsichtigt ist, dass die private Nachricht ausschließlich an dem Empfangs-Terminal angezeigt wird, welches durch die Information, die das Empfangs-Terminal **kennzeichnet,** festgelegt ist und
wobei die private Nachricht gesendet wird, ohne dass eine gesonderte Konferenzschaltung, insbesondere gesonderter Chatroom, initialisiert und geöffnet werden muss worin nur das Terminal welches die private Nachricht sendet und das Empfangs-Terminal teilnehmen, sondern die laufende Konferenzschaltung, insbesondere Chatroom, benutzt wird; und
Anzeigen einer empfangenen allgemeinen Nachricht und einer empfangenen privaten Nachricht unterscheidbar für einen Benutzer durch Anzeigen der privaten Nachricht zusammen mit Information, dass die Nachricht als private Nachricht gesendet wurde, wobei das Anzeigen der privaten Nachricht ohne vorherige Handlung durch den Benutzer und ohne eine gesonderte Konferenzschaltung, insbesondere Chatroom, für die private Nachricht initialisieren und öffnen zu müssen durchgeführt wird.

17. Das computerlesbare Speichermedium gemäß Anspruch 16, wobei wenn eine Nachricht zu dem Server gesendet wird, ein Quellen-Terminal von einem Benutzer eine Privatkommunikationsauswahl empfängt, die **kennzeichnet**, ob die Nachricht als private Nachricht gesendet wird und eine Empfängerauswahl empfängt, die ein Empfangs-Terminal der privaten Nachricht **kennzeichnet** und das Quellen-Terminal den Header erzeugt basierend auf der Privatkommunikationsauswahl und der Empfängerauswahl.

18. Das computerlesbare Speichermedium nach Anspruch 16 oder 17, wobei wenn die Nachricht, die von dem Server empfangen wird, angezeigt wird, das Empfangs-Terminal eine private Nachricht zu dem das Flag, das **kennzeichnet**, dass die Nachricht als private Nachricht gesendet ist gesetzt ist, zusammen mit der Information dass die Nachricht als private Nachricht gesendet ist anzeigt, und eine allgemeine Nachricht zu der das Flag das anzeigt, dass die Nachricht als private Nachricht gesendet ist nicht gesetzt ist, in demselben Anzeigenbereich anzeigt.

19. Das computerlesbare Speichermedium gemäß einem der Ansprüche 16 bis 18, wobei das Anzeigen der empfangenen privaten Nachricht nur ausgeführt wird, falls das Terminal, welches die private Nachricht empfängt, durch die Information, die das Empfangs-Terminal der privaten Nachricht **kennzeichnet,** bestimmt ist.

## Revendications

1. Procédé de téléconférence pour réaliser une téléconférence, qui est en particulier un salon de discussion, avec un système comprenant au moins un serveur et une pluralité de terminaux, dans lequel les terminaux sont capables de partager des messages les uns avec les autres au moyen d'un réseau, et dans lequel le serveur transfère des messages envoyés par l'un des terminaux à d'autres terminaux,
**caractérisé en ce que** :
un terminal source est capable de créer un message général, qui est envoyé à tous les autres terminaux participant à la téléconférence, en particulier au salon de discussion, et de plus, ledit terminal source est capable de créer un message privé, qui est adressé exclusivement à un terminal destinataire particulier qui est spécifié par le terminal source et qui participe à ladite téléconférence, en particulier au salon de discussion, dans lequel ledit terminal source envoie ledit message privé sans devoir initialiser ni ouvrir une téléconférence séparée, en particulier un salon de discussion séparé, à laquelle seuls le terminal source et le terminal destinataire particulier du message privé participent, mais, au lieu de cela, utilise ladite téléconférence en cours, en particulier le salon de discussion ; et
dans lequel un terminal destinataire participant à la téléconférence, en particulier au salon de discussion, est capable de recevoir ledit message général et est capable de recevoir ledit message privé pour lequel le terminal destinataire est spécifié en tant que terminal destinataire ;
dans lequel le terminal destinataire est capable d'afficher le message général reçu et le message privé reçu qui peuvent être distingués par un utilisateur par l'affichage du message général dans une zone d'affichage de l'écran d'affichage de message et par l'affichage du message privé avec des informations indiquant qu'il a été envoyé en tant que message privé dans ladite zone d'affichage d'utilisateur, dans lequel ledit affichage du message privé est effectué sans action préalable de l'utilisateur et sans devoir initialiser ni ouvrir une téléconférence séparée, en particulier un salon de discussion séparé, pour ledit message privé.

2. Procédé de téléconférence selon la revendication 1,
**caractérisé en ce que** :
un terminal source accepte d'un utilisateur une sélection de communication privée indiquant si le message est envoyé en tant que message privé et une sélection de destinataire indiquant un destinataire du message privé, et
le terminal source crée et envoie un message privé lorsque la sélection de communication privée existe ou un message général lorsque la sélection de communication privée n'existe pas.

3. Procédé de téléconférence selon la revendication 1 ou 2,
**caractérisé en ce que** :
un procédé de contrôle de message amène un terminal source à ajouter à un message un en-tête comprenant un indicateur indiquant si le message est envoyé en tant que message privé, et
à ajouter au dit en-tête des informations identifiant un terminal destinataire du message si ledit message est envoyé en tant que message privé.

4. Procédé de téléconférence selon la revendication 3,
**caractérisé en ce que** :
un serveur transfère un message général reçu de l'un des terminaux à tous les autres terminaux participant à la téléconférence, en particulier au salon de discussion, et
ledit serveur transfère un message privé reçu de l'un des terminaux participant à ladite téléconférence, en particulier au salon de discussion, exclusivement aux terminaux destinataires qui sont spécifiés dans l'en-tête dudit message privé en tant que terminaux destinataires dudit message privé.

5. Procédé de téléconférence selon l'une quelconque des revendications 1 à 3,
**caractérisé en ce que** :
un serveur transfère un message général et un message privé reçus de l'un des terminaux à tous les autres terminaux participant à la téléconférence, en particulier au salon de discussion, et
un terminal destinataire qui reçoit ledit message privé affiche ledit message privé reçu si ledit message privé reçu est adressé au dit terminal destinataire, et
ledit terminal destinataire qui reçoit ledit message privé n'affiche pas ledit message privé reçu si ledit message privé reçu n'est pas adressé au dit terminal destinataire.

6. Procédé de téléconférence selon les revendications 3 et 5,
**caractérisé en ce que** :
ledit terminal destinataire détermine si ledit message privé reçu est adressé au dit terminal destinataire sur la base desdites informations identifiant un terminal destinataire dudit message ajoutées au dit en-tête.

7. Système de téléconférence pour effectuer une téléconférence, qui est en particulier un salon de discussion, comprenant une pluralité de terminaux et au moins un serveur, dans lequel les terminaux sont adaptés pour partager des messages les uns avec les autres au moyen d'un réseau, et dans lequel le serveur est adapté pour transférer des messages envoyés par l'un des terminaux aux autres terminaux,
**caractérisé en ce que** :
un terminal source comprend un système d'envoi qui est adapté pour créer dans la téléconférence, en particulier le salon de discussion, un message général qui est envoyé à tous les autres terminaux participant à ladite téléconférence, en particulier au salon de discussion, et qui est adapté en outre pour créer un message privé adressé exclusivement à un terminal particulier participant à ladite téléconférence, en particulier au salon de discussion, sur la base d'informations fournies par un utilisateur, moyennant quoi ledit terminal source est adapté pour envoyer ledit message privé sans devoir initialiser ni ouvrir une téléconférence séparée, en particulier un salon de discussion séparé, à laquelle seuls le terminal source et le terminal destinataire particulier dudit message privé participent, mais, au lieu de cela, ledit terminal source est adapté pour utiliser ladite téléconférence en cours, en particulier le salon de discussion ;
un serveur comprenant un système de transfert qui est adapté pour transférer dans la téléconférence, en particulier le salon de discussion, le message général, moyennant quoi ledit système de transfert est adapté pour transférer ledit message privé dans ladite téléconférence en cours, en particulier le salon de discussion, sans le besoin d'une téléconférence séparée, en particulier d'un salon de discussion séparé, à laquelle seuls le terminal source et le terminal destinataire particulier dudit message privé participent ; et
un terminal destinataire comprend un système d'affichage qui est adapté pour afficher un message général reçu et un message privé reçu qui peuvent être distingués par un utilisateur par l'affichage du message général dans une zone d'affichage de l'écran d'affichage de message et par l'affichage du message privé avec des informations indiquant que ledit message privé a été envoyé en tant que message privé dans ladite zone d'affichage, moyennant quoi ledit affichage du message privé est effectué sans action préalable de l'utilisateur et sans un besoin d'une téléconférence séparée, en particulier d'un salon de discussion séparé, pour ledit message privé.

8. Système de téléconférence selon la revendication 7,
**caractérisé en ce que** :
un terminal source est adapté pour accepter d'un utilisateur une sélection de communication privée indiquant si le message est envoyé en tant que message privé et une sélection de destinataire indiquant un destinataire dudit message privé, et
ledit terminal source est adapté pour créer et pour envoyer un message privé lorsque la sélection de communication privée existe ou un message général lorsque la sélection de communication privée n'existe pas.

9. Système de téléconférence selon l'une des revendications 7 ou 8,
**caractérisé en ce que** :
le terminal source est adapté pour ajouter à un message un en-tête comprenant un indicateur indiquant si le message est envoyé en tant que message privé et est adapté pour ajouter au dit en-tête des informations identifiant un terminal destinataire du message si ledit message est envoyé en tant que message privé.

10. Système de téléconférence selon la revendication 9,
**caractérisé en ce que** :
ledit système de transfert dudit serveur est, en outre, adapté pour transférer un message général reçu de l'un des terminaux à tous les autres terminaux participant à la téléconférence, en particulier au salon de discussion, et
ledit système de transfert dudit serveur est, en outre, adapté pour transférer un message privé reçu de l'un des terminaux participant à ladite téléconférence, en particulier au salon de discussion, exclusivement aux terminaux destinataires qui sont spécifiés dans l'en-tête dudit message privé en tant que terminaux destinataires dudit message privé.

11. Système de téléconférence selon l'une quelconque des revendications 7 à 9,
**caractérisé en ce que** :
ledit système de transfert dudit serveur est adapté pour transférer un message général et un message privé reçus de l'un des terminaux à tous les autres terminaux participant à la téléconférence, en particulier au salon de discussion, et
un terminal destinataire qui reçoit ledit message privé est, en outre, adapté pour afficher ledit message privé reçu si ledit message privé reçu est adressé au dit terminal destinataire, et
ledit terminal destinataire qui reçoit ledit message privé est, en outre, adapté pour ne pas afficher ledit message privé reçu si ledit message privé reçu n'est pas adressé au dit terminal destinataire.

12. Système de téléconférence selon les revendications 9 et 11,
**caractérisé en ce que** :
ledit terminal destinataire est, en outre, adapté pour déterminer si ledit message privé reçu est adressé au dit terminal destinataire sur la base desdites informations identifiant un terminal destinataire dudit message ajoutées au dit en-tête.

13. Serveur pour fournir un service de communication privée dans une téléconférence, qui est en particulier un salon de discussion, à laquelle une pluralité de terminaux participent, comprenant un système de transfert qui est adapté pour transférer un message général reçu d'un terminal source participant à ladite téléconférence, en particulier au salon de discussion, à tous les autres terminaux participant à ladite téléconférence, en particulier au salon de discussion, et de plus, le serveur est adapté pour transférer un message privé reçu du terminal source exclusivement à un terminal particulier participant à ladite téléconférence, en particulier au salon de discussion, sur la base d'informations fournies par le terminal source, moyennant quoi ledit système de transfert est adapté pour transférer ledit message privé dans ladite téléconférence, en particulier le salon de discussion, sans le besoin d'une téléconférence séparée, en particulier d'un salon de discussion séparé, à laquelle seuls le terminal source et le terminal destinataire particulier participent.

14. Serveur selon la revendication 13,
**caractérisé en ce que** :
le serveur comprend un récepteur qui est adapté pour recevoir du terminal source un message auquel un en-tête est ajouté comprenant un indicateur indiquant si le message est envoyé en tant que message privé et des informations identifiant le terminal destinataire, et
le système de transfert est adapté pour transférer un message reçu, auquel l'indicateur dans ledit en-tête indiquant si le message est envoyé en tant que message privé est établi, exclusivement pour ledit terminal destinataire particulier spécifié par lesdites informations identifiant le terminal destinataire dudit message.

15. Support d'enregistrement pouvant être lu par un ordinateur sur lequel est enregistré un programme pour contrôler un serveur pour fournir un service de communication privée dans une téléconférence, en particulier un salon de discussion, à laquelle une pluralité de terminaux participent et pour amener un ordinateur à effectuer :
la réception, d'un terminal source qui participe à ladite téléconférence, en particulier au salon de discussion, d'un message auquel un en-tête est ajouté comprenant un indicateur indiquant si le message est envoyé en tant que message privé et des informations pour identifier un terminal destinataire particulier participant à ladite téléconférence, en particulier au salon de discussion ; et
le transfert, dans ladite téléconférence, en particulier le salon de discussion, du message reçu, dans lequel l'indicateur indiquant que le message est envoyé en tant que message privé est établi, exclusivement pour le terminal destinataire particulier qui est spécifié p ar lesdites informations identifiant ledit terminal destinataire particulier sans le besoin d'une téléconférence séparée, en particulier d'un salon de discussion séparé, à laquelle seuls le terminal source et le terminal destinataire particulier dudit message reçu participent ; et
le transfert, dans ladite téléconférence, en particulier le salon de discussion, du message reçu d'un terminal source participant à ladite téléconférence, en particulier au salon de discussion, dans lequel l'indicateur indiquant que le message est envoyé en tant que message privé n'est pas établi, pour tous les autres terminaux qui participent à ladite téléconférence, en particulier au salon de discussion.

16. Support d'enregistrement pouvant être lu par un ordinateur sur lequel est enregistré un programme pour contrôler une pluralité de terminaux pour mettre en oeuvre un service de communication privée dans une téléconférence, en particulier un salon de discussion, et pour amener un ordinateur à effectuer :
l'envoi, à un serveur, d'un message général et/ou d'un message privé, tout en ajoutant au message un en-tête comprenant un indicateur indiquant si le message est envoyé en tant que message privé et des informations pour identifier un terminal destinataire du message qui participe à ladite téléconférence, en particulier au salon de discussion, dans lequel ledit message général est destiné à être affiché sur tous les autres terminaux qui participent à ladite téléconférence, en particulier au salon de discussion, et dans lequel ledit message privé est destiné à être affiché exclusivement sur ledit terminal destinataire spécifié par lesdites informations identifiant le terminal destinataire, et
dans lequel ledit message privé est envoyé sans devoir initialiser ni ouvrir une téléconférence séparée, en particulier un salon de discussion séparé, à laquelle seuls le terminal envoyant ledit message privé et ledit terminal destinataire participent, mais, au lieu de cela, en utilisant ladite téléconférence en cours, en particulier le salon de discussion ; et
l'affichage d'un message général reçu et d'un message privé reçu qui peuvent être distingués par un utilisateur par l'affichage dudit message privé avec des informations indiquant que le message a été envoyé en tant que message privé, dans lequel ledit affichage du message privé est effectué sans action préalable de l'utilisateur et sans devoir initialiser ni ouvrir une téléconférence séparée, en particulier un salon de discussion séparé, pour ledit message privé.

17. Support d'enregistrement pouvant être lu par un ordinateur selon la revendication 16, dans lequel, dans l'envoi du message au serveur, un terminal source accepte une sélection de communication privée indiquant si le message est envoyé en tant que message privé et une sélection de destinataire indiquant le terminal destinataire dudit message privé d'un utilisateur et crée l'en-tête sur la base de la sélection de communication privée et de la sélection de destinataire.

18. Support d'enregistrement pouvant être lu par un ordinateur selon la revendication 16 ou 17, dans lequel, lors de l'affichage du message reçu du serveur, le terminal destinataire affiche un message privé, dans lequel l'indicateur indiquant que le message est envoyé en tant que message privé est établi, avec des informations indiquant que ledit message est envoyé en tant que message privé, et affiche un message général, dans lequel l'indicateur indiquant que le message est envoyé en tant que message privé n'est pas établi dans la même zone d'affichage.

19. Support d'enregistrement pouvant être lu par un ordinateur selon l'une quelconque des revendications 16 à 18, dans lequel ledit affichage dudit message privé reçu n'est effectué que si ledit terminal recevant ledit message privé est spécifié par lesdites informations identifiant le terminal destinataire dudit message privé.
